# EUROPEAN PATENT APPLICATION

(11) **EP 3 974 673 A1**
(43) Date of publication of application: **30.03.2022**
(21) Application number: 20809324.5
(22) Date of filing: 24.01.2020
(51) Int. Cl.: F16D 41/07, F16D 41/08

(54) **CAM CLUTCH**

(30) Priority: 20.05.2019 JP 2019094347
(71) Applicant: Tsubakimoto Chain Co., Osaka 530-0005 (JP)
(72) Inventor: NAKAGAWA Eiichi, Osaka-shi, Osaka 530-0005 (JP); KUNIMATSU Kohei, Osaka-shi, Osaka 530-0005 (JP); MURASE Fumiya, Osaka-shi, Osaka 530-0005 (JP)
(74) Representative: dompatent von Kreisler Selting Werner - Partnerschaft von Patent- und Rechtsanwälten mbB
(86) International application number: PCT/JP2020/002442
(87) International publication number: WO 2020/235137

(57) **Abstract**

An object of the present invention is to provide a cam clutch capable of switching from one operating mode to another with a simple structure and with high responsiveness, and of securing an expected torque capacity. The cam clutch of the present invention includes an operating mode switch mechanism (140) for switching between a free state that allows relative rotation between an inner race (110) and an outer race (120) and a locked state that prohibits relative rotation between the inner race (110) and the outer race (120). The operating mode switch mechanism (140) includes a cam attitude change part (141) that forcibly tilts a plurality of cams (131) circumferentially arranged between the inner race (110) and the outer race (120). The cam attitude change part (141) is provided such as to be movable circumferentially, radially, or axially independently of the rotation of the inner race (110) and the outer race (120).

## Description

### [Technical Field]

The present invention relates to a cam clutch with an operating mode switch mechanism for switching between a free state that allows relative rotation between an outer race and an inner race and a locked state that prohibits relative rotation between the outer race and the inner race.

### [Background Art]

As one type of clutch that controls transmission and interruption of a rotary force, switchable two-way clutches that can drive and freewheel in both forward and reverse directions are known.

Some types of two-way clutches are configured to switch between a locked state that prohibits relative rotation between the inner race and the outer race (transmits the rotary force) and a free state that allows relative rotation between the inner race and the outer race (interrupts the rotary force) by tilting cams or sprags (see, for example, Patent Literature 1 and Patent Literature 2).

Patent Literature 3 describes a two-way clutch with a switch mechanism that can switch among three operating modes, i.e., two-way free mode, one-way lock mode, and two-way lock mode, by controlling a retainer that retains rollers or power transmission members either at a neutral position or at one engaged position on cam surfaces formed on the inner circumference of the outer race.

### [Citation List]

### [Patent Literature]

[Patent Literature 1] Japanese Patent Application Publication No. 2011-220509
[Patent Literature 2] Japanese Patent Application Publication No. H11-182589
[Patent Literature 3] Japanese Patent Application Publication No. 2014-219015

### [Summary of Invention]

### [Technical Problem]

The two-way clutch described in Patent Literature 1 switches the states of engagement and separation between an input-side rotary member and an output-side rotary member by means of sprags that are tilted in the same direction as the rotation direction of the input-side rotary member when the input-side rotary member is rotated relative to the output-side rotary member. This poses the problem of poor responsiveness due to the time lost when the rotation direction is switched. The two-way clutch described in Patent Literature 2 entails the same problem.

The two-way clutch described in Patent Literature 3 uses plate spring members to allow power transmission in both directions. The problem with this two-way clutch, however, is that the torque the clutch can transmit is small for its size because it relies on friction for the power transmission.

The present invention solves these problems, with an aim to provide a cam clutch capable of switching from one operating mode to another with a simple structure and with high responsiveness, and of securing an expected torque capacity.

### [Solution to Problem]

The present invention solves the above problems by providing a cam clutch including: an inner race and an outer race that are coaxial and rotatable relative to each other; a plurality of cams circumferentially arranged between the inner race and the outer race; a biasing means radially biasing the plurality of cams; and an operating mode switch mechanism switching between a free state that allows relative rotation between the outer race and the inner race and a locked state that prohibits relative rotation between the outer race and the inner race, the operating mode switch mechanism including a cam attitude change part that is movable circumferentially, radially, or axially independently of rotation of the inner race and the outer race to forcibly tilt the cams.

### [Advantageous Effects of Invention]

According to the invention set forth in claim 1, the cams can be tilted to a predetermined direction only by moving the cam attitude change part circumferentially, radially, or axially. Therefore, high responsiveness can be achieved in the switching of operating modes of the cam clutch. Since the clutch is a power transmission mechanism that uses cams, an expected torque capacity can be secured because there are no limitations set by frictional force on the transmissible torque capacity.

Since the cams are tilted by the action of the circumferential surface of the cams as the cam attitude change part moves, noises made by the cam attitude change part and cams sliding each other, or the cams contacting the track surfaces in transition from the free state to the locked state are not generated. Since the cams make rolling contact with the track surfaces of the inner race and outer race, i.e., there is no slippage between the cams and the track surfaces, the risk of wear caused by freewheeling between the cams and the inner race or outer race can be avoided.

According to the invention set forth in claim 2, the cams can be tilted by the movement of the pin members that form the cam attitude change part along the circumferential surface of the cams, so that the drive member only need to be capable of a simple rotary movement, and the switching of the operating modes can be made with a very simple structure.

According to the invention set forth in claim 3, the first cam and the second cam are rotated in different directions for making engagement. This makes possible the switching among four operating modes, i.e., the two-way free mode allowing rotation in both forward and reverse directions, one-way lock mode allowing rotation in either one of the forward and reverse directions, and the two-way lock mode prohibiting rotation in both forward and reverse directions, by changing the attitude of one or both of the first cam and second cam.

According to the invention set forth in claim 4, cams having the same outer shape can be used as the first cam and second cam, so that the number of parts can be reduced and assembly is made easy, which enables advantageous production of cam clutches as desired.

According to the invention set forth in claim 5, the attitudes of the first cam and second cam can be controlled by the operating mode switch mechanism shared by the first cam and second cam, so that an increase in structural complexity or size of the cam clutch can be avoided.

According to the invention set forth in claim 6, the attitude of the first cam and the attitude of the second cam can be controlled simultaneously, so that the structure of the cam clutch can be made simple.

According to the invention set forth in claim 7, a sufficiently high torque capacity can be secured for both forward and reverse directions by each of the two cam mechanisms with different rotation directions for making engagement.

### [Brief Description of Drawings]

[Fig. 1] Fig. 1 is an exploded perspective view illustrating a configuration of a cam clutch according to a first embodiment of the present invention.
[Fig. 2] Fig. 2 is a cross-sectional view along the X axis of the cam clutch shown in Fig. 1.
[Fig. 3] Fig. 3 is a plan view of the cam clutch shown in Fig. 1, in which the operating mode switch mechanism is omitted.
[Fig. 4] Fig. 4 is a plan view illustrating one configuration example of a cam.
[Fig. 5A] Fig. 5A is a schematic diagram of the cam clutch shown in Fig. 1 in a state in which the operating mode is a two-way lock mode.
[Fig. 5B] Fig. 5B is a schematic diagram of the cam clutch shown in Fig. 1 in a state in which the operating mode is switched to a one-way lock mode that allows rotation of the outer race relative to the inner race in a forward direction.
[Fig. 5C] Fig. 5C is a schematic diagram of the cam clutch shown in Fig. 1 in a state in which the operating mode is switched to a one-way lock mode that allows rotation of the outer race relative to the inner race in a reverse direction.
[Fig. 6] Fig. 6 is a schematic plan view illustrating one example of the configuration of the cam clutch according to a second embodiment of the present invention.
[Fig. 7A] Fig. 7A is a schematic diagram illustrating a state of pin members when a drive member is rotated in a reverse direction.
[Fig. 7B] Fig. 7B is a schematic diagram of the cam clutch shown in Fig. 6 in a state in which the operating mode of the cam clutch is switched to a two-way free mode that allows rotation of the outer race relative to the inner race in both forward and reverse directions.
[Fig. 8] Fig. 8 is a schematic cross-sectional view along the X axis illustrating one example of the configuration of the cam clutch according to a third embodiment of the present invention.
[Fig. 9] Fig. 9 is a plan view of the cam clutch shown in Fig. 8 viewed from the drive member side.
[Fig. 10] Fig. 10 is a perspective view illustrating one configuration example of a first cam that forms the cam mechanism in the cam clutch shown in Fig. 8.
[Fig. 11] Fig. 11 is a perspective view illustrating one configuration example of a second cam that forms the cam mechanism in the cam clutch shown in Fig. 8.
[Fig. 12A] Fig. 12A is a cross-sectional view illustrating a state in which the drive member is axially moved to a first attitude change position.
[Fig. 12B] Fig. 12B is a schematic plan view illustrating a state in which the operating mode of the cam clutch is switched to the one-way lock mode that allows rotation of the inner race relative to the outer race in a forward direction.
[Fig. 13A] Fig. 13A is a cross-sectional view illustrating a state in which the drive member is axially moved to a second attitude change position.
[Fig. 13B] Fig. 13B is a schematic plan view illustrating a state in which the operating mode of the cam clutch is switched to the two-way free mode that allows rotation of the inner race relative to the outer race in a reverse direction.
[Fig. 14] Fig. 14 is a schematic cross-sectional view along the X axis illustrating one example of the configuration of the cam clutch according to a fourth embodiment of the present invention.
[Fig. 15] Fig. 15 is a schematic cross-sectional view along the X axis illustrating one example of the configuration of the cam clutch according to a fifth embodiment of the present invention.
[Fig. 16] Fig. 16 is a schematic plan view illustrating one example of the configuration of the cam clutch according to a sixth embodiment of the present invention.
[Fig. 17] Fig. 17 is a schematic diagram of the cam clutch shown in Fig. 16 in a state in which the operating mode of the cam clutch is switched to a two-way free mode that allows rotation of the outer race relative to the inner race in both forward and reverse directions.
[Fig. 18] Fig. 18 is a schematic perspective view illustrating one configuration example of a cam cage ring.

### [Description of Embodiments]

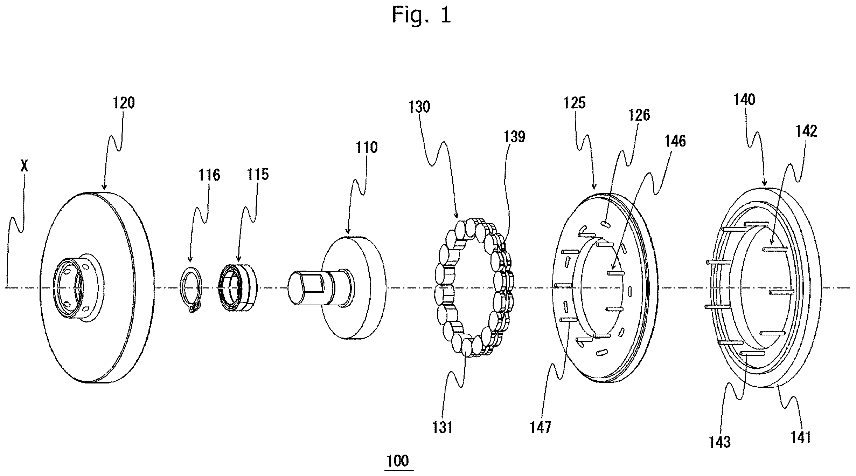

Embodiments of the present invention are described with reference to Fig. 1 to Fig. 18. Note, however, the present invention is not limited to these embodiments.

### Embodiment 1

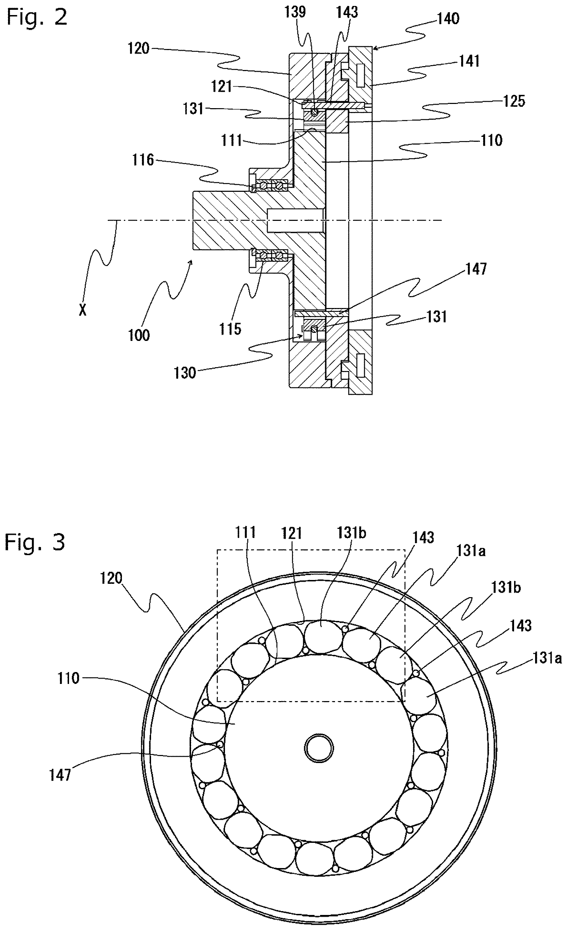

The cam clutch 100 according to a first embodiment of the present invention includes, as illustrated in Fig. 1 and Fig. 2, an inner race 110 and an outer race 120 provided on the same X axis rotatably relative to each other, a bearing 115 coaxially holding the inner race 110 and outer race 120, a cam mechanism 130 disposed between an outer circumferential engagement surface 111 of the inner race 110 and an inner circumferential engagement surface 121 of the outer race 120 that face each other, a stop ring 116 that prevents detachment of the inner race 110 from the outer race 120, a retainer plate 125 that retains the cam mechanism 130 in the axial direction, and an operating mode switch mechanism 140 that switches the operating modes of the cam clutch 100.

The cam mechanism 130 is made up of a plurality of cams 131 circumferentially aligned on the same circumference, and a biasing means 139 that biases the plurality of cams 131 radially inward. The cams 131 should preferably be disposed along the circumferential direction with little or no space therebetween. With the cam mechanism configured as described above, a high torque transmission capacity can be realized.

The cam mechanism 130 according to this embodiment includes first cams and second cams that rotate in different directions for making engagement. Below, the first and second cams may be referred to as cams 131 except when the first or second cams are mentioned specifically or separately.

The arrangement of the first cams and second cams in the cam mechanism 130 is not limited to a particular layout. Preferably, however, as illustrated in Fig. 3, the first cams 131a and second cams 131b should be arranged alternately. With the cams configured as described above, the attitudes of the first cams 131a and second cams 131b can be controlled by the operating mode switch mechanism 140 shared by the first cams 131a and second cams 131b, so that an increase in structural complexity or size of the cam clutch 100 can be avoided. Also, the attitude of the first cams 131a and the attitude of the second cams 131b can be controlled simultaneously.

It is not necessary for the first cams 131a and second cams 131b to be aligned alternately on the same circumference. Therefore the numbers of the first cams 131a and second cams 131b may be the same, or different.

The first cams 131a and second cams 131b have outer shapes that are identical to each other, for example, the first cams 131a reversed front to back being used as the second cams 131b. The first cams 131a and second cams 131b may have outer shapes that are different from each other. By having identical outer shapes, the number of parts can be reduced, and assembly is made easy.

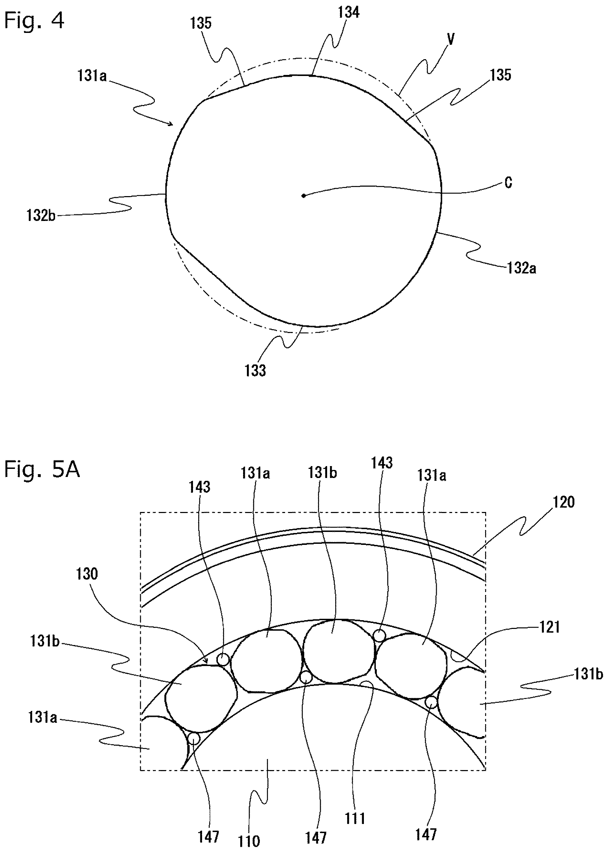

The first cam 131a has an outer shape, in plan view, comprised of arcuate curved surfaces 132a and 132b along the circumference of a virtual circle V formed in opposite regions on both sides of the center C of the virtual circle V, and a radially inner engagement surface 133 and a radially outer engagement surface 134 that smoothly continue from each of these arcuate curved surfaces 132a and 132b, as shown in Fig. 4. The cam further has slopes 135 and 135 that function as cam action surfaces when a cam attitude change part to be described later abuts thereon in regions between one arcuate curved surface 132a and the radially outer engagement surface 134 and between the other arcuate curved surface 132b and the radially outer engagement surface 134.

The first cam 131a is configured to make frictional engagement with the inner race 110 and outer race 120 when the outer race 120 rotates in one direction, and to tilt in a direction in which it lifts off from the inner race 110 and outer race 120 when the outer race 120 rotates in the other direction.

Therefore, the second cam 131b, which is the first cam 131a reversed front to back, is configured to make frictional engagement with the inner race 110 and outer race 120 when the outer race 120 rotates in the other direction, and to tilt in a direction in which it lifts off from the inner race 110 and outer race 120 when the outer race 120 rotates in one direction.

A ring-like garter spring, for example, is used as the biasing means 139. The garter spring is provided such as to connect the first cams 131a and second cams 131b to each other.

The biasing means 139 may be any resilient member that can bias each of the plurality of cams 131 either radially inward or outward. A plurality of plate springs or torsion springs or the like may also be used.

The retainer plate 125 fitted with the inner circumferential surface of the outer race 120 on one axial end of the outer race 120 is fixed to the outer race 120 to rotate integrally therewith and positioned such as to cover the end face of each of the plurality of cams 131.

The cam clutch 100 according to this embodiment is provided with an operating mode switch mechanism for switching between a free state that allows relative rotation between the inner race 110 and outer race 120 and a locked state that prohibits relative rotation between the inner race 110 and outer race 120.

The operating mode switch mechanism 140 of this embodiment includes a cam attitude change part 142 that is provided such as to be circumferentially rotatable independently of the rotation of the inner race 110 and outer race 120 to forcibly tilt the cams 131.

The operating mode switch mechanism 140 of this embodiment includes a drive member 141 that is an annular plate provided such as to be rotatable relative to the inner race 110 or outer race 120, and a plurality of pin members 143 held at one end on the drive member 141 and extending in the direction of the X axis, these pin members 143 functioning as the cam attitude change part 142. The cam attitude change part 142 is thus configured to move circumferentially when the drive member 141 is driven to rotate.

While the cam attitude change part 142 is configured by pin members 143 in this embodiment, the cam attitude change part 142 may be any component capable of tilting the cams 131 and is not limited to pin members 143.

The plurality of pin members 143 that form the cam attitude change part 142 are passed through corresponding guide holes 126 formed in the retainer plate 125 and positioned between the opposite slopes 135 and 135 of the first cams 131a and the second cams 131b adjacent each other. The guide holes 126 are circular arc holes, for example, and a corresponding number of guide holes are formed at circumferentially spaced positions on the same circumference for the plurality of pin members 143.

The operating mode switch mechanism 140 of this embodiment further includes a position restricting part 146 that restricts displacement of the cams 131 with the movement of the cam attitude change part 142 toward a moving direction of the cam attitude change part 142.

The position restricting part 146 is configured by a plurality of pin members 147, for example. The plurality of pin members 147 are each held at one end on the retainer plate 125, and positioned between the opposite ones of the other arcuate curved surfaces 132b and 132b of the first cams 131a and the second cams 132b adjacent each other.

Similarly to the cam attitude change part 142, the position restricting part 146 is not limited to pin members 147, and may be any component that can restrict circumferential displacement of the cams 131.

Hereinafter, the operation of the cam clutch 100 according to the above first embodiment will be described.

First, the cam clutch shall be in the two-way lock mode in which rotation of the outer race 120 relative to the inner race 110 is prohibited in both forward and reverse directions as shown in Fig. 5A, for example, when the pin members 143 constituting the cam attitude change part 142 are at the neutral position (position where they do not act (function) on either of the adjacent first cam 131a and the second cam 131b). Namely, the cam clutch 100 functions as a two-way clutch.

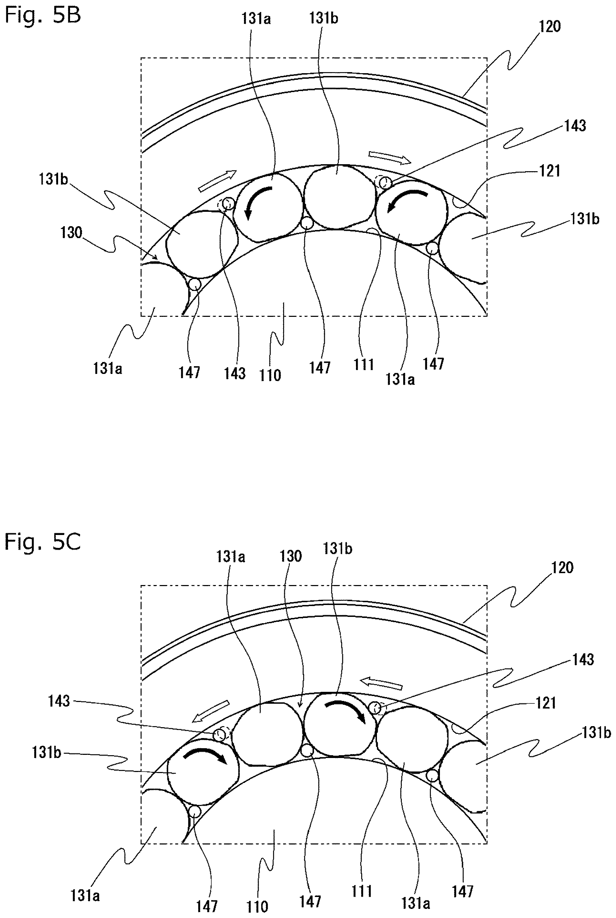

For example, when the drive member 141 is rotated in the forward direction (e.g., clockwise in Fig. 5A) manually or by a suitable drive source, each of the plurality of pin members 143 moves circumferentially in the forward direction relative to the cam mechanism 130, as shown in Fig. 5B. This causes the first cams 131a to tilt in the direction in which they lift off from the outer race 120 by the action of the slopes 135 of the first cams 131a. Meanwhile, the second cams 131b stay in contact with the inner race 110 and outer race 120 by the rotational moment applied by the resiliency of the biasing means 139.

In this way, when the drive member 141 is rotated in the forward direction, the operating mode of the cam clutch 100 is switched from the two-way lock mode to the one-way lock mode that allows rotation of the outer race 120 relative to the inner race 110 in the forward direction. Namely, the cam clutch 100 can be made to function as a one-way clutch.

On the other hand, when the drive member 141 is rotated in the reverse direction (e.g., counterclockwise in Fig. 5A) manually or by a suitable drive source, each of the plurality of pin members 143 moves circumferentially in the reverse direction relative to the cam mechanism 130, as shown in Fig. 5C. This causes the second cams 131b to tilt in the direction in which they lift off from the outer race 120 by the action of the slopes 135 of the second cams 131b. Meanwhile, the first cams 131a stay in contact with the inner race 110 and outer race 120 by the rotational moment applied by the resiliency of the biasing means 139.

In this way, when the drive member 141 is rotated in the reverse direction, the operating mode of the cam clutch 100 is switched from the two-way lock mode to the one-way lock mode that allows rotation of the outer race 120 relative to the inner race 110 in the reverse direction. Namely, the cam clutch 100 can be made to function as a one-way clutch.

In the configuration described above, the operating mode switch mechanism 140 is not limited to the one with the cam attitude change part 142 that is circumferentially moved independently of the rotation of the inner race 110 and outer race 120. The cam attitude change part 142 may be configured to move radially or axially independently of the rotation of the inner race 110 and outer race 120.

### Embodiment 2

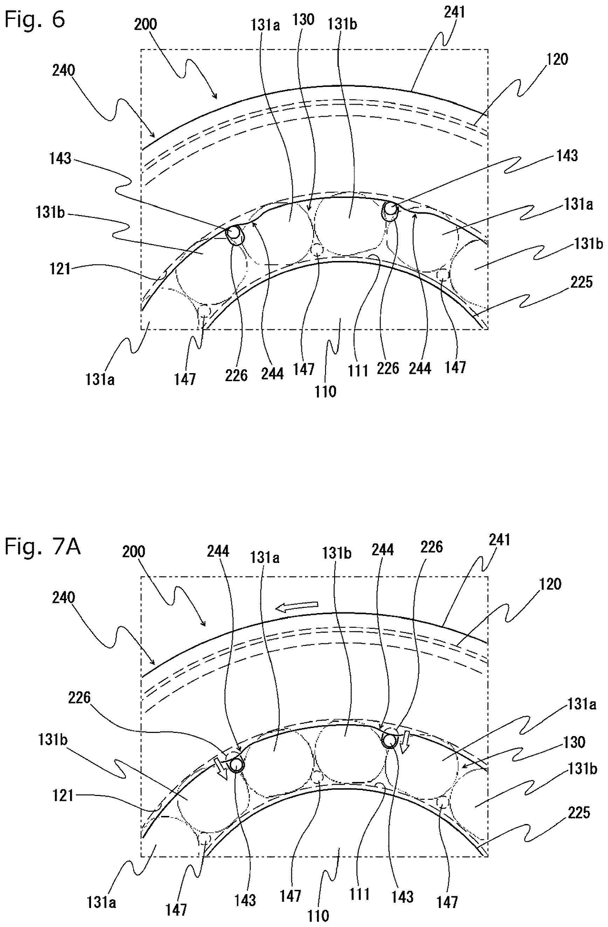

Fig. 6 is a schematic plan view illustrating one example of the configuration of the cam clutch according to a second embodiment of the present invention.

This cam clutch 200 has a basic configuration similar to that of the cam clutch 100 according to the first embodiment, and includes an inner race 110 and an outer race 120 provided on the same axis rotatably relative to each other, a bearing (not shown) coaxially holding the inner race 110 and outer race 120, a cam mechanism 130 disposed between the outer circumferential engagement surface 111 of the inner race 110 and the inner circumferential engagement surface 121 of the outer race 120 that face each other, a stop ring (not shown) that prevents detachment of the inner race 110 from the outer race 120, a retainer plate 225 that retains the cam mechanism 130 in the axial direction, and an operating mode switch mechanism 240 that switches the operating modes of the cam clutch 200. Hereinafter, differences from the cam clutch 100 according to the first embodiment will be described.

The operating mode switch mechanism 240 of the cam clutch 200 according to the second embodiment is configured to move the cam attitude change part in a radial direction. The cam attitude change part is not limited to a particular configuration as long as it can tilt the cams 131 similarly to the cam clutch 100 according to the first embodiment. In this embodiment, the cam attitude change part is configured by a plurality of pin members 143. The pin members 143 are provided such as to be radially movable in an axially extending posture. The plurality of pin members 143 are each passed through guide holes 226 formed in the retainer plate 225 and positioned between the opposite slopes 135 and 135 of the first cams 131a and the second cams 131b adjacent each other. The guide holes 226 are formed as through holes having radially extending, elongated openings.

The operating mode switch mechanism 240 includes an annular plate-like drive member 241 that is provided such as to be rotatable relative to the inner race 110 or the outer race 120. The drive member 241 is formed with cam parts 244 protruding radially inward, for example, on an inner circumferential surface thereof. The plurality of pin members 143 each abut on the inner circumferential surface of the drive member 241, so that, when the drive member 241 is rotated, the plurality of pin members 143 each moves radially by the cam action of the cam parts 244.

The operation of the cam clutch 200 according to the above second embodiment will be described.

This cam clutch 200 is designed to be in the two-way lock mode, for example, in which rotation of the outer race 120 relative to the inner race 110 is prohibited in both forward and reverse directions, when the pin members 143 constituting the cam attitude change part are at the neutral position, as shown in Fig. 6. Namely, the cam clutch 200 functions as a two-way clutch.

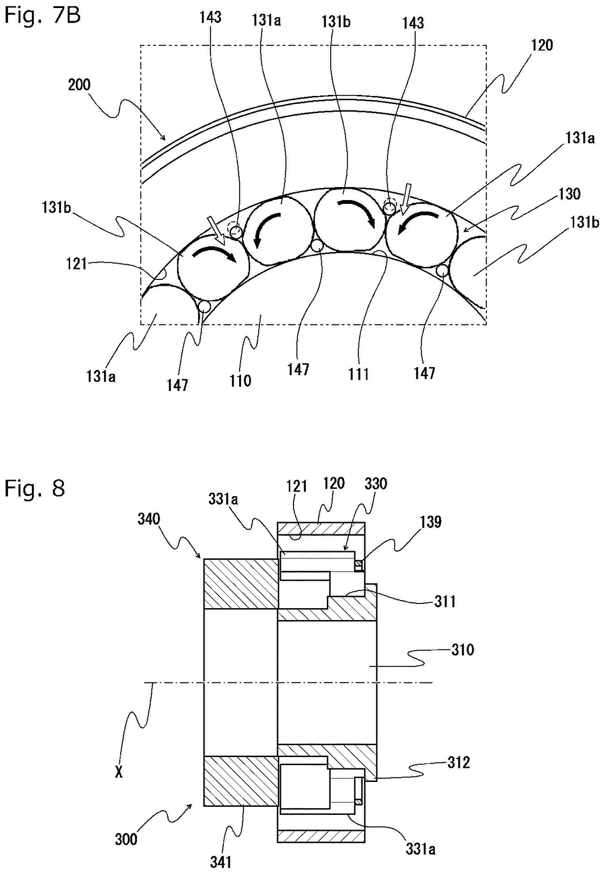

When the drive member 241 is rotated manually or by a suitable drive source, each of the plurality of pin members 143 moves radially inward by the cam action of the cam parts 244, guided by the guide holes 226, as shown in Fig. 7A. This causes both of the adjacent first cams 131a and second cams 131b to tilt in the direction in which they lift off from the outer race 120 as shown in Fig. 7B, so that the operating mode of the cam clutch 200 is switched from the two-way lock mode to the two-way free mode in which rotation of the outer race 120 relative to the inner race 110 is allowed in both forward and reverse directions.

### Embodiment 3

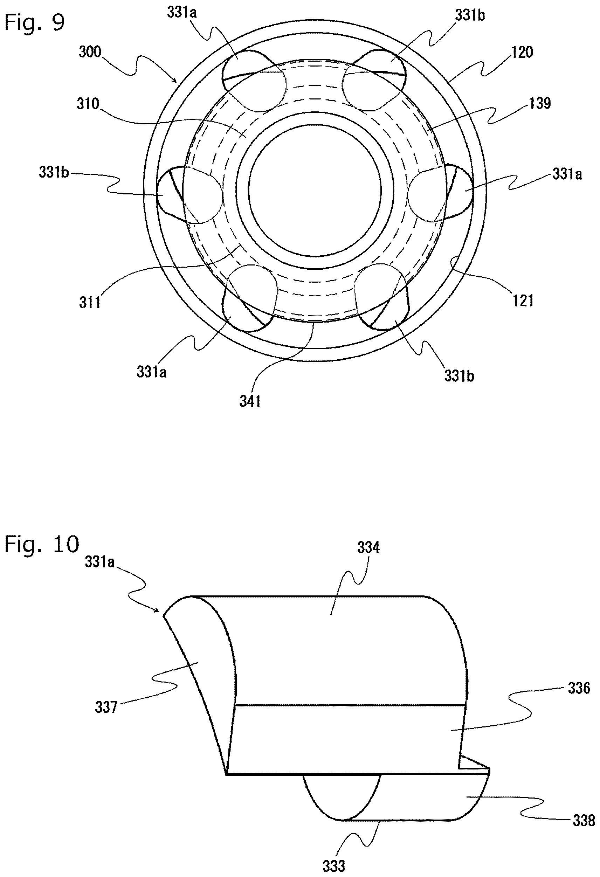

Fig. 8 is a schematic cross-sectional view along the X axis illustrating one example of the configuration of the cam clutch according to a third embodiment of the present invention. Fig. 9 is a plan view of the cam clutch shown in Fig. 8 viewed from the drive member side. Some parts of the cam mechanism are omitted in Fig. 9 for ease of understanding. In the actual configuration, the cam mechanism is configured by a plurality of circumferentially arranged cams adjoining each other.

This cam clutch 300 includes an inner race 310 and an outer race 120 provided on the same X axis rotatably relative to each other, a cam mechanism 330 disposed between the outer circumferential engagement surface 311 of the inner race 310 and the inner circumferential engagement surface 121 of the outer race 120 that face each other, and an operating mode switch mechanism 340 that switches the operating modes of the cam clutch 300.

The inner race 310 of the cam clutch 300 according to the third embodiment has a flange part 312 at the distal end relative to the operating mode switch mechanism 340 such as to protrude radially outward, and this flange part 312 restricts axial movements of the cam mechanism 330.

The cam mechanism 330 is made up of first cams 331a and second cams 331b having different outer shapes and circumferentially aligned on the same circumference.

The first cam 331a includes, as shown in Fig. 10, a columnar base part 336 having a substantially elongated cross-sectional shape, a radially outer engagement part 337 extending axially outward from an end face on the proximal side of the base part 336 relative to the operating mode switch mechanism 340, and a radially inner engagement part 338 extending axially outward from an end face on the distal side of the base part 336 relative to the operating mode switch mechanism 340.

The outer surface of the radially outer engagement part 337 is continuous with the circumferential surface on the radially outer side of the base part 336 and they together form a radially outer engagement surface 334 that engages with the inner circumferential engagement surface 121 of the outer race 120. The inner surface of the radially outer engagement part 337 is a curved surface curved in an arcuate shape protruding radially outward, so that, when the drive member 341 is moved axially as will be described later, the radially outer engagement part is pressed radially outward to tilt the first cams 331a in a direction in which they lift off from the inner race 310.

The outer surface of the radially inner engagement part 338 is continuous with the circumferential surface on the radially inner side of the base part 336 and they together form a radially inner engagement surface 333 that engages with the outer circumferential engagement surface 311 of the inner race 310. The inner surface of the radially inner engagement part 338 is a slope so that the first cams 331a are tilted in a direction in which they make engagement with the inner race 310 and outer race 120 by a biasing force applied by the biasing means 139 that is an annular spring, for example.

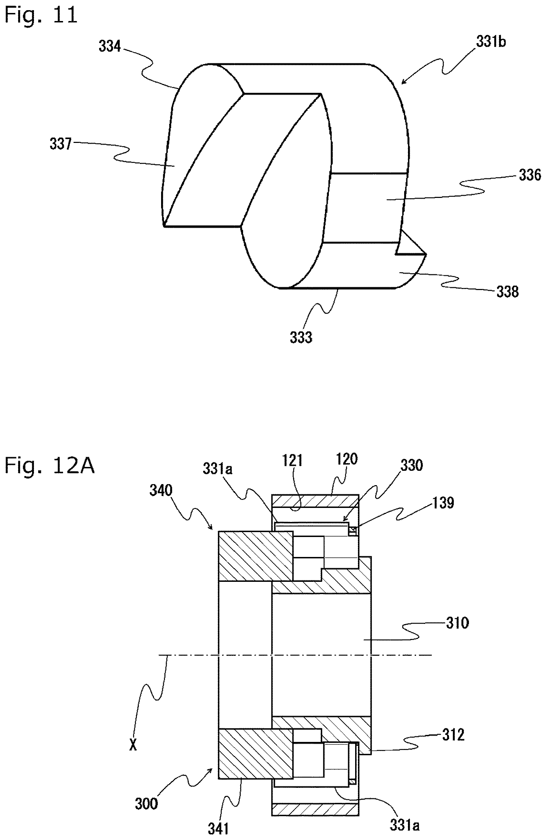

The second cam 331b has the same basic configuration as that of the first cam 331a except for the axial length of the radially outer engagement part 337 and the shape of the inner surface of the radially outer engagement part 337, as shown in Fig. 11.

The operating mode switch mechanism 340 of the cam clutch 300 according to the third embodiment is configured to move the cam attitude change part in a radial direction.

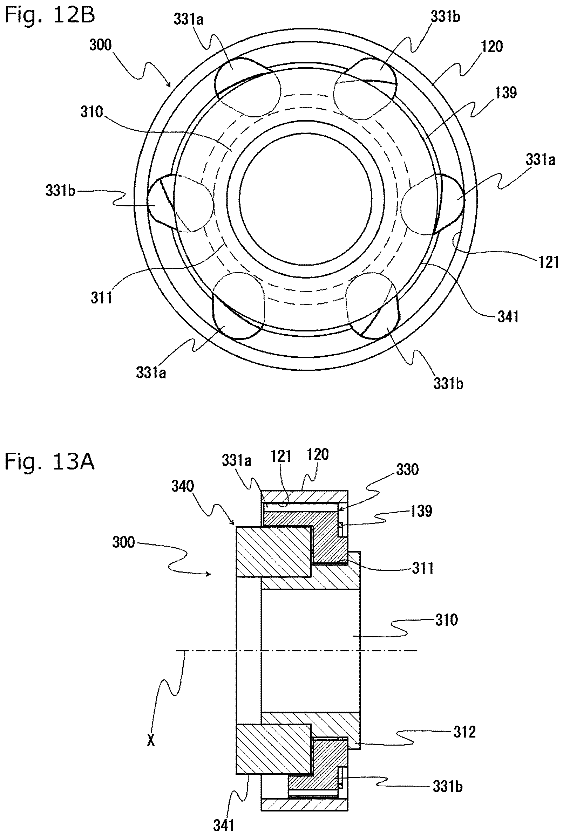

The operating mode switch mechanism 340 includes a drive member 341 that is provided such as to be axially movable independently of the inner race 310 and outer race 120. The drive member 341 is configured by a cylindrical hydraulic piston, for example, and in this embodiment, the drive member 341 functions also as the cam attitude change part. The drive member 341 is controlled to move from one to another of a neutral position on the axially outer side of the cam mechanism 330 as shown in Fig. 8, a first attitude change position where it causes the first cams 331a to tilt (see Fig. 12A), and a second attitude change position where it causes not only the first cams 331a but also the second cams 331b to tilt (see Fig. 13A).

The operation of the cam clutch 300 according to the above third embodiment will be described.

This cam clutch 300 is in the two-way lock mode, for example, in which rotation of the inner race 310 relative to the outer race 120 is prohibited in both forward and reverse directions, when the drive member 341 is at the neutral position as shown in Fig. 8. Namely, the cam clutch 300 functions as a two-way clutch.

When the drive member 341 is axially moved from the neutral position to the first attitude change position as shown in Fig. 12A, the outer circumferential surface of the drive member 341 presses the inner surface of the radially outer engagement parts 337 of the first cams 331a radially outward. This causes the first cams 331a to shift radially outward as shown in Fig. 12B, as well as to tilt in the direction in which the first cams 331a lift off from the inner race 310 by the action of the inner surface of the radially outer engagement parts 337, and so the first cams 331a lift off from the inner race 310.

In this way, when the drive member 341 is moved from the neutral position to the first attitude change position, the operating mode of the cam clutch 300 is switched from the two-way lock mode to the one-way lock mode that allows rotation of the inner race 310 relative to the outer race 120 in the forward direction (clockwise in Fig. 9). Namely, the cam clutch 300 can be made to function as a one-way clutch.

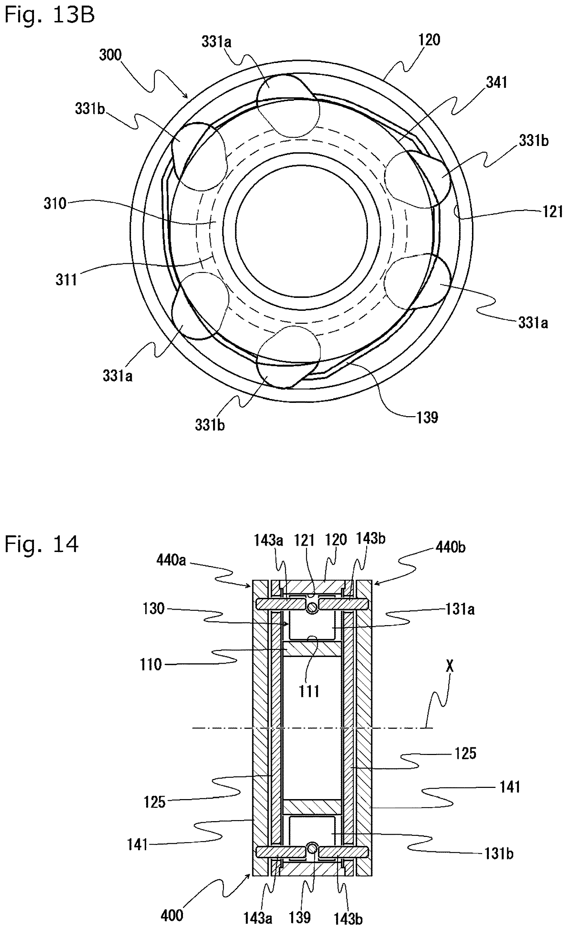

When the drive member 341 is moved from the neutral position or the first attitude change position to the second attitude change position as shown in Fig. 13A, the outer circumferential surface of the drive member 341 presses the inner surface of the radially outer engagement parts 337 of the second cams 331b radially outward. This causes not only the first cams 331a but also the second cams 331b to lift off from the inner race 340. Namely, the second cams 331b shift radially outward as shown in Fig. 13B, as well as tilt in the direction in which the second cams 331b lift off from the inner race 310 by the action of the inner surface of the radially outer engagement parts 337, and so the second cams 331b lift off from the inner race 310.

This way, by moving the drive member 341 from the neutral position to the second attitude change position, for example, the operating mode of the cam clutch 300 is switched from the two-way lock mode to the two-way free mode in which rotation of the inner race 310 relative to the outer race 120 is allowed in both forward and reverse directions.

The cam clutch 300 according to the third embodiment may also be configured to be switchable to the one-way lock mode that allows rotation of the inner race 310 relative to the outer race 120 in the reverse direction by suitably changing the configurations of the first cams 331a and second cams 331b.

### Embodiment 4

Fig. 14 is a schematic plan view illustrating one example of the configuration of the cam clutch according to a fourth embodiment of the present invention.

This cam clutch 400 has a basic configuration similar to that of the cam clutch 100 according to the first embodiment, and includes an inner race 110 and an outer race 120 provided on the same X axis rotatably relative to each other, a bearing (not shown) coaxially holding the inner race 110 and outer race 120, a cam mechanism 130 disposed between the outer circumferential engagement surface 111 of the inner race 110 and the inner circumferential engagement surface 121 of the outer race 120 that face each other, a stop ring (not shown) that prevents detachment of the inner race 110 from the outer race 120, a retainer plate 125 that retains the cam mechanism 130 in the axial direction, and an operating mode switch mechanism that switches the operating modes of the cam clutch 400. Hereinafter, differences from the cam clutch 100 according to the first embodiment will be described.

The cam clutch 400 according to this embodiment has the operating mode switch mechanism on both sides in the axial direction of the cam mechanism 130, one operating mode switch mechanism 440a being configured to change the attitude of the first cams 131a of the cam mechanism 130, and another operating mode switch mechanism 440b being configured to change the attitude of the second cams 131b.

The one operating mode switch mechanism 440a and the other operating mode switch mechanism 440b may either be configured to move the pin members 143a and 143b that form the cam attitude change part circumferentially, or to move the pin members 143a and 143b radially. Also, the one operating mode switch mechanism 440a and the other operating mode switch mechanism 440b may either have the same configuration, or different configurations. In this embodiment, the one operating mode switch mechanism 440a and the other operating mode switch mechanism 440b are both configured to move the pin members 143a and 143b circumferentially, for example.

The cam clutch 400 of this embodiment can switch among four operating modes, i.e., two-way lock mode, forward direction lock mode, reverse direction lock mode, and two-way free mode.

First, the cam clutch shall be in the two-way lock mode in which rotation of the outer race 120 relative to the inner race 110 is prohibited in both forward and reverse directions when the pin members 143a constituting the cam attitude change part of the one operating mode switch mechanism 440a and the pin members 143b constituting the cam attitude change part of the other operating mode switch mechanism 440b are at the neutral position (position where they do not act (function) on either of the first cams 131a and second cams 131b). Namely, the cam clutch 400 functions as a two-way clutch.

Below, the rotation direction shall refer to the rotation direction as viewed from one side in the X axis direction where the one operating mode switch mechanism 440a is located (left side in Fig. 14).

The drive member 141 of the one operating mode switch mechanism 440a only is rotated in the forward direction manually or by a suitable drive source to cause each of the plurality of pin members 143a to move circumferentially relative to the cam mechanism 130. This causes the first cams 131a to tilt in the direction in which they lift off from the outer race 120, so that the operating mode of the cam clutch 400 is switched from the two-way lock mode to the one-way lock mode in which rotation of the outer race 120 relative to the inner race 110 is allowed in the forward direction. Namely, the cam clutch 400 can be made to function as a one-way clutch.

On the other hand, the drive member 141 of the other operating mode switch mechanism 440b only is rotated in the reverse direction manually or by a suitable drive source to cause each of the plurality of pin members 143b to move circumferentially relative to the cam mechanism 130. This causes the second cams 131b to tilt in the direction in which they lift off from the outer race 120, so that the operating mode of the cam clutch 400 is switched from the two-way lock mode to the one-way lock mode in which rotation of the outer race 120 relative to the inner race 110 is allowed in the reverse direction. Namely, the cam clutch 400 can be made to function as a one-way clutch.

By operating the drive member 141 of the one operating mode switch mechanism 440a and the drive member 141 of the other operating mode switch mechanism 440b as described above, both of the first cams 131a and second cams 131b are tilted in the direction in which they lift off from the outer race 120, so that the operating mode of the cam clutch 400 is switched from the two-way lock mode to the two-way free mode in which rotation of the outer race 120 relative to the inner race 110 is allowed in both forward and reverse directions.

In the cam clutch 400 according to the fourth embodiment, one of the one operating mode switch mechanism 440a and the other operating mode switch mechanism 440b may be of the type that moves the pin members 143a and 143b radially, in which case, too, the cam clutch can switch among the four operating modes, the two-way lock mode, forward direction lock mode, reverse direction lock mode, and two-way free mode, by separately controlling the attitudes of the first cams 131a and second cams 131b.

### Embodiment 5

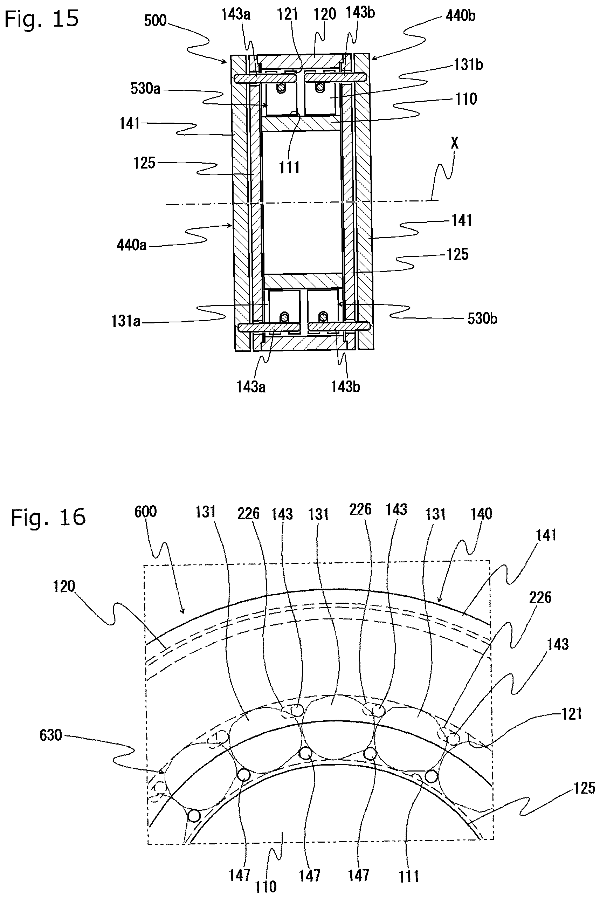

Fig. 15 is a schematic plan view illustrating one example of the configuration of the cam clutch according to a fifth embodiment of the present invention.

This cam clutch 500 has a basic configuration similar to that of the cam clutch 400 according to the fourth embodiment, and includes an inner race 110 and an outer race 120 provided on the same X axis rotatably relative to each other, a bearing (not shown) coaxially holding the inner race 110 and outer race 120, a cam mechanism disposed between the outer circumferential engagement surface 111 of the inner race 110 and the inner circumferential engagement surface 121 of the outer race 120 that face each other, a stop ring (not shown) that prevents detachment of the inner race 110 from the outer race 120, a retainer plate 125 that retains the cam mechanism in the axial direction, and two operating mode switch mechanisms 440a and 440b that switch the operating modes of the cam clutch 500. Hereinafter, differences from the cam clutch 400 according to the fourth embodiment will be described.

The cam clutch 500 according to this embodiment has two rows of cam mechanisms 530a and 530b each made up of a plurality of cams circumferentially aligned on the same circumference.

The first cam mechanism 530a and second cam mechanism 530b include one or both of the first cams 131a and second cams 131b. In the case where both of the first cams 131a and second cams 131b are included, the arrangements of the first cams 131a and second cams 131b are not limited to a particular layout similarly to the cam mechanism 130 according to the first embodiment.

One example will be described below in which the first cam mechanism 530a is made up only of the first cams 131a, while the second cam mechanism 530b is made up only of the second cams 131b, for example.

The cam clutch 500 of this embodiment can switch among four operating modes, two-way lock mode, forward direction lock mode, reverse direction lock mode, and two-way free mode.

First, the cam clutch shall be in the two-way lock mode in which rotation of the outer race 120 relative to the inner race 110 is prohibited in both forward and reverse directions when the pin members 143a constituting the cam attitude change part of the one operating mode switch mechanism 440a and the pin members 143b constituting the cam attitude change part of the other operating mode switch mechanism 440b are at the neutral position (position where they do not act (function) on either of the first cams 131a and second cams 131b). Namely, the cam clutch 500 functions as a two-way clutch.

Below, the rotation direction shall refer to the rotation direction as viewed from one side in the X axis direction where the one operating mode switch mechanism 440a is located (left side in Fig. 15).

The drive member 141 of the one operating mode switch mechanism 440a only is rotated in the forward direction manually or by a suitable drive source to cause each of the plurality of pin members 143a to move circumferentially relative to the first cam mechanism 530a. This causes the first cams 131a of the first cam mechanism 530a to tilt in the direction in which they lift off from the outer race 120, so that the operating mode of the cam clutch 500 is switched from the two-way lock mode to the one-way lock mode in which rotation of the outer race 120 relative to the inner race 110 is allowed in the forward direction by the second cam mechanism 530b. This way, the cam clutch 500 can be made to function as a one-way clutch.

On the other hand, the drive member 141 of the other operating mode switch mechanism 440b only is rotated in the reverse direction manually or by a suitable drive source to cause each of the plurality of pin members 143b to move circumferentially relative to the second cam mechanism 530b. This causes the second cams 131b of the second cam mechanism 530b to tilt in the direction in which they lift off from the outer race 120, so that the operating mode of the cam clutch 500 is switched from the two-way lock mode to the one-way lock mode in which rotation of the outer race 120 relative to the inner race 110 is allowed in the reverse direction by the first cam mechanism 530a. This way, the cam clutch 500 can be made to function as a one-way clutch.

By operating the drive member 141 of the one operating mode switch mechanism 440a and the drive member 141 of the other operating mode switch mechanism 440b as described above, both of the first cams 131a and second cams 131b are tilted in the direction in which they lift off from the inner race 110, so that the operating mode of the cam clutch 500 is switched from the two-way lock mode to the two-way free mode in which rotation of the outer race 120 relative to the inner race 110 is allowed in both forward and reverse directions.

### Embodiment 6

Fig. 16 is a schematic plan view illustrating one example of the configuration of the cam clutch according to a sixth embodiment of the present invention.

This cam clutch 600 has a basic configuration similar to that of the cam clutch 100 according to the first embodiment, and includes an inner race 110 and an outer race 120 provided on the same axis rotatably relative to each other, a bearing (not shown) coaxially holding the inner race 110 and outer race 120, a cam mechanism disposed between the outer circumferential engagement surface 111 of the inner race 110 and the inner circumferential engagement surface 121 of the outer race 120 that face each other, a stop ring (not shown) that prevents separation of the inner race 110 from the outer race 120, a retainer plate 125 that retains the cam mechanism in the axial direction, and an operating mode switch mechanism 140 that switches the operating modes of the cam clutch 600. Hereinafter, differences from the cam clutch 100 according to the first embodiment will be described.

The cam clutch 600 according to this embodiment includes a cam mechanism 630 made up of a plurality of cams 131 having the same outer shape circumferentially aligned on the same circumference.

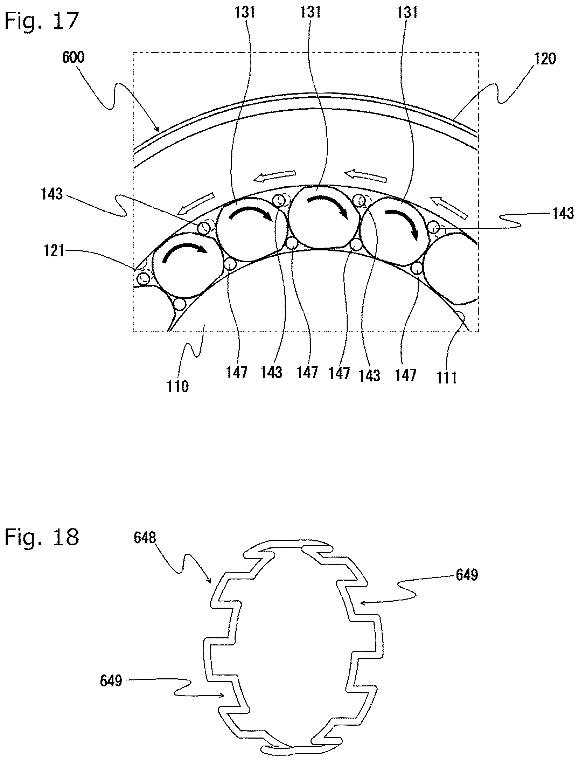

In this embodiment, the plurality of pin members 143 that constitute the cam attitude change part and the plurality of pin members 147 that constitute the position restricting part are arranged corresponding to each of the plurality of cams 131. The position restricting part, instead of being provided with the pin members 147, may be configured with a cam cage ring 648 that keeps the attitude of the cams 131 such as the one shown in Fig. 18, for example. The cam cage ring 648 is a metal wire bent to form accommodating parts 649 each corresponding to each of the plurality of cams 131, and provided such as to rotate integrally with the inner race 110.

This cam clutch 600 is in the one-way lock mode in which rotation of the outer race 120 relative to the inner race 110 is prohibited in the reverse direction when the pin members 143 constituting the cam attitude change part are at the neutral position as shown in Fig. 16.

When the drive member 141 is rotated in the reverse direction manually or by a suitable drive source, each of the plurality of pin members 143 moves circumferentially in the reverse direction as shown in Fig. 17. This causes all the cams 131 to tilt in the direction in which they lift off from the outer race 120, so that the operating mode of the cam clutch 600 is switched from the one-way lock mode to the two-way free mode in which rotation of the outer race 120 relative to the inner race 110 is allowed in both forward and reverse directions.

While embodiments of the present invention have been described above in detail, the present invention is not limited to the embodiments described above. Various design changes may be made without departing from the scope of the present invention set forth in the claims.

While configurations in which the operating mode switch mechanism causes the cams to lift off from the outer race have been described in the above embodiments, the cam clutch of the present invention may be configured to cause the cams to lift off from the inner race.

The above embodiments have been described with respect to a case where, when the cam attitude change part is at a neutral position, or in a neutral state, the cam clutch is in the two-way lock mode. Instead, the neutral state may be the one-way lock mode, or two-way free mode.

The cams forming the cam mechanism may be configured to make frictional engagement with the inner race and outer race when rotated to either of the forward direction and reverse direction.

The drive member may be configured to have the cam attitude change part on itself as in the cam clutch according to the third embodiment. The same applies to the position restricting part.

Furthermore, in the first, second, fourth, and fifth embodiments described above, the position restricting part may be configured with a cam cage ring that keeps the attitude of the cams.

### [Reference Signs List]

- 100, 200, 300, 400: Cam clutch
- 110, 310: Inner race
- 111, 311: Outer circumferential engagement surface
- 312: Flange part
- 115: Bearing
- 116: Stop ring
- 120: Outer race
- 121: Inner circumferential engagement surface
- 125, 225: Retainer plate
- 126, 226: Guide hole
- 130, 330: Cam mechanism
- 131: Cam
- 131a, 331a: First cam
- 131b, 331b: Second cam
- 132a: One arcuate curved surface
- 132b: The other arcuate curved surface
- 133, 333: Radially inner engagement surface
- 134, 334: Radially outer engagement surface
- 135: Slope
- 336: Base part
- 337: Radially outer engagement part
- 338: Radially inner engagement part
- 139: Biasing means
- 140, 240, 340: Operating mode switch mechanism
- 440a: One operating mode switch mechanism
- 440b: The other operating mode switch mechanism
- 141, 241, 341: Drive member
- 142: Cam attitude change part
- 143: Pin member
- 143a: Pin member
- 143b: Pin member
- 244: Cam part
- 146: Position restricting part
- 147: Pin member
- 500, 600: Cam clutch
- 630: Cam mechanism
- 530a: First cam mechanism
- 530b: Second cam mechanism
- 648: Cam cage ring
- 649: Accommodating part
- C: Center of virtual circle
- V: Virtual circle

## Claims

1. A cam clutch comprising: an inner race and an outer race that are coaxial and rotatable relative to each other; a plurality of cams circumferentially arranged between the inner race and the outer race; a biasing means radially biasing the plurality of cams; and
an operating mode switch mechanism switching between a free state that allows relative rotation between the outer race and the inner race and a locked state that prohibits relative rotation between the outer race and the inner race,
the operating mode switch mechanism including a cam attitude change part that is movable circumferentially, radially, or axially independently of rotation of the inner race and the outer race to forcibly tilt the cams.

2. The cam clutch according to claim 1, wherein the operating mode switch mechanism is configured to move the cam attitude change part circumferentially,
the cam attitude change part including an axially extending pin member, the pin member being held on a drive member that is rotatable relative to the outer race or the inner race.

3. The cam clutch according to claim 1 or 2, wherein the plurality of cams include a first cam that tilts to make frictional engagement with the outer race and the inner race when the outer race or the inner race rotates in one direction, and a second cam that tilts to make frictional engagement with the outer race and the inner race when the outer race or the inner race rotates in the other direction.

4. The cam clutch according to claim 3, wherein the second cam is the first cam reversed front to back.

5. The cam clutch according to claim 3 or 4, wherein the first cam and the second cam are arranged on a same circumference.

6. The cam clutch according to claim 5, wherein the first cam and the second cam are arranged alternately.

7. The cam clutch according to claim 3 or 4, comprising two cam mechanisms having a plurality of cams including either one or both of the first cam and the second cam arranged on a same circumference.
